# EUROPÄISCHE PATENTSCHRIFT

(11) **EP 2 107 976 B1**
(45) Veröffentlichungstag und Bekanntmachung des Hinweises auf die Patenterteilung: **16.06.2010**
(21) Anmeldenummer: 08859607.7
(22) Anmeldetag: 08.12.2008
(51) Int. Cl.: B60J 10/04

(54) **DICHTUNG ZUM ABDICHTEN DER FENSTERSCHEIBE EINES KRAFTFAHRZEUGS, VERSTÄRKUNGSTRÄGER FÜR EINE SOLCHE DICHTUNG UND VERFAHREN ZUM HERSTELLEN DER DICHTUNG**
SEAL FOR SEALING THE WINDOW OF A MOTOR VEHICLE, REINFORCING SUPPORT FOR SUCH A SEAL AND METHOD FOR PRODUCING THE SEAL
GARNITURE D'ÉTANCHÉITÉ POUR VITRE D'UN VÉHICULE À MOTEUR, SUPPORT DE RENFORT POUR UNE TELLE GARNITURE, ET PROCÉDÉ DE PRODUCTION DE LADITE GARNITURE

(30) Priorität: 10.12.2007 DE 102007059411
(43) Veröffentlichungstag der Anmeldung: 14.10.2009
(73) Patentinhaber: Metzeler Automotive Profile Systems GmbH, 88131 Lindau/Bodensee (DE)
(72) Erfinder: HEMAUER, Stephan, 88147 Achberg (DE); SOLF, Bernd, 88069 Tettnang (DE)
(74) Vertreter: Schober, Christoph D.
(86) Internationale Anmeldenummer: PCT/EP2008/066993
(87) Internationale Veröffentlichungsnummer: WO 2009/074525

(56) Entgegenhaltungen:
- EP-A- 0 393 943
- EP-A- 0 460 792
- EP-A- 0 473 123
- DE-A1-102005 022 152
- GB-A- 1 287 085
- GB-A- 2 339 229
- US-A- 6 141 854
- US-A1- 2001 025 451

## Beschreibung

Die Erfindung betrifft eine Dichtung, die zum Abdichten der Fensterscheibe eines Kraftfahrzeugs dient. Die Dichtung weist ein Dichtungsprofil auf, das aus einem elastisch verformbaren Werkstoff besteht. Die Erfindung bezieht sich ferner auf einen Verstärkungsträger, der dazu geeignet ist, das Dichtungsprofil zu armieren. Darüber hinaus bezieht sich die Erfindung auf ein Verfahren zum Herstellen der Dichtung.

Im Fahrzeugbau sind Dichtungen anzutreffen, die dazu dienen, den in der Regel in der Tür eines Kraftfahrzeugs angeordneten Fensterschacht für eine verfahrbare Fensterscheibe abzudichten. Diese sogenannten Fensterschachtdichtungen weisen ein Dichtungsprofil auf, das aus einem elastisch verformbaren Werkstoff, insbesondere einem Elastomer, besteht und in der Regel durch Extrusion gefertigt wird. Beispiele für eine solche Fensterschachtdichtung werden in der EP 1 066 167 B1 und der DE 10 2005 022 152 A1 beschrieben.

Das Dichtungsprofil der Fensterschachtdichtung weist einen Dichtungsabschnitt auf, der mit einer Dichtlippe versehen ist, die an der Fensterscheibe anliegt. Das Dichtungsprofil weist ferner einen Befestigungsabschnitt auf, der auf einen Flansch des Fensterschachts aufgesteckt wird. Der Befestigungsabschnitt ist zu diesem Zweck im Querschnitt annähernd U-förmig ausgestaltet und weist demzufolge einen in den Fensterschacht eingreifenden inneren Schenkel, einen außerhalb des Fensterschachts liegenden äußeren Schenkel und einen den inneren Schenkel und den äußeren Schenkel miteinander verbindenden Basisabschnitt auf. Um eine ausreichende Klemmwirkung auf dem Flansch zu erzielen, ist der Befestigungsabschnitt durch einen im Allgemeinen aus Metall bestehenden Verstärkungsträger armiert. Der aus der EP 1 066 167 B1 bekannte Verstärkungsträger ist im Querschnitt L-förmig oder S-förmig ausgebildet und erstreckt sich ausschließlich in dem äußeren Schenkel und dem Basisabschnitt, um sicherzustellen, dass Teile des inneren Schenkels ohne den Verstärkungsträger weggeschnitten werden können. Ein Wegschneiden von Teilen des Dichtungsprofils ist mitunter notwendig, um den unterschiedlichen Ausgestaltungen, die Fahrzeugtüren haben, gerecht zu werden.

Verstärkungsträger sind jedoch häufig im Querschnitt U-förmig ausgestaltet und weisen demzufolge einen Flankenabschnitt auf, der sich in den inneren Schenkel hinein erstreckt, um sicherzustellen, dass der innere Schenkel mit einer ausreichenden Anpresskraft an dem Flansch anliegt. Ein solcher Verstärkungsträger wird in der EP 0 473 123 A1 und der DE 10 2005 022 152 A1 beschrieben.

Der aus der EP 0 473 123 A1 bekannte Verstärkungsträger weist zwei Flankenabschnitte auf, die durch einen Mittelabschnitt miteinander verbunden sind. Die Flankenabschnitte sind mit Schlitzen versehen, die eine offene Kontur haben und sich in der Querrichtung des Verstärkungsträgers von dem jeweiligen Rand der Flankenabschnitte bis in den Mittelabschnitt hinein erstrecken. Der Mittelabschnitt ist mit Schlitzen versehen, die eine geschlossene Kontur haben und in der Längsrichtung des Verstärkungsträgers zwischen den Schlitzen der Flankenabschnitte angeordnet sind. Die durch Stanzen oder Einschneiden erzeugten Schlitze verleihen dem Verstärkungsträger eine Verformungsfähigkeit, die es gestattet, den Verstärkungsträger zu biegen, zu recken oder zu stauchen, um sicherzustellen, dass der Verstärkungsträger und damit das durch den Verstärkungsträger armierte Dichtungsprofil einem gekrümmten Verlauf des Flanschs folgen kann.

Für die Herstellung der Dichtung werden der vorgefertigte Verstärkungsträger und das Dichtungsprofil koextrudiert. Vor allem dann, wenn der Verstärkungsträger keine Schlitze aufweist, wie beispielsweise der aus der DE 10 2005 022 152 A1 bekannte Verstärkungsträger, und damit über eine vergleichsweise hohe Steifigkeit verfügt, ist es erforderlich, nach der Extrusion die Dichtung zum Beispiel mittels Rollbiegen oder Streckbiegen entsprechend dem Verlauf des Flanschs zu biegen. Die Biegebearbeitung ist ein separater Arbeitsgang und verursacht hohe Kosten.

Ein weiterer Nachteil, der sich insbesondere bei Verstärkungsträgern ergibt, die, wie aus der EP 0 473 123 A1 bekannt, mit Schlitzen versehen sind, um über eine hohe Biegsamkeit zu verfügen, ist das Auftreten von Welligkeiten in der Längsrichtung, die zum einen die Dichtwirkung und zum anderen das optische Erscheinungsbild der Dichtung beeinträchtigen.

Dichtungen, die zum Abdichten des Fensterschachts eines Kraftfahrzeugs dienen, sind ferner aus der JP 2006298239 A und US 6,141,854 A bekannt. Die Fensterschachtdichtungen setzen sich jeweils aus einem Dichtungsabschnitt, der mit an einer Fensterscheibe anliegenden Dichtlippen versehen ist, und einem Befestigungsabschnitt, der auf einen Flansch der Tür eines Kraftfahrzeugs aufsteckbar ist, zusammen. Der Befestigungsabschnitt ist mittels eines Verstärkungsträgers armiert, der im Querschnitt im Wesentlichen U-förmig ist und sich demnach aus zwei Flankenabschnitten und einem die Flankenabschnitte miteinander verbindenden Mittelabschnitt zusammensetzt.

Eine Gattungsgemäße, armierte Dichtung für eine bewegbare Fensterscheibe eines Kraftfahrzeugs, die an der Innenseite eines Schachtabschnitts für die Fensterscheibe angeordnet ist, wird in US 2001/0025451 A1 beschrieben. Die Dichtung ist etwas kürzer ausgebildet als die Fensteröffnung breit ist, um anschließend auf die gewünschte Länge gestreckt werden zu können. Die Dichtung weist zu diesem Zweck eine Armierung auf, die mit Sollbruchstellen versehen ist, die durch Schlitze gebildet werden. Im gestreckten Zustand liegt die Dichtung an vertikalen Führungsschienen der Fensterscheibe an, um auf diese Weise störende Fahrgeräusche zu reduzieren.

Der Erfindung liegt die Aufgabe zugrunde, eine Dichtung zu schaffen, die ein durch einen Verstärkungsträger armiertes Dichtungsprofil aufweist und an einen gekrümmten Verlauf eines Flanschs angepasst werden kann, ohne dass es einer aufwendigen Biegebearbeitung bedarf.

Diese Aufgabe wird durch eine Dichtung gemäß Anspruch 1, einen Verstärkungsträger gemäß Anspruch 10 und ein Verfahren zum Herstellen einer Dichtung gemäß Anspruch 20 gelöst. Bevorzugte Ausgestaltungen der Erfindung werden in den Ansprüchen 2 bis 9 und 11 bis 19 definiert.

Die erfindungsgemäße Dichtung umfasst ein Dichtungsprofil, das aus einem elastisch verformbaren, vorzugsweise elastomeren, Werkstoff besteht und sich in einer Längsrichtung erstreckt, und den erfindungsgemäßen Verstärkungsträger, der das Dichtungsprofil armiert. Das Dichtungsprofil setzt sich aus einem Dichtungsabschnitt, der mit wenigstens einer Dichtlippe versehen ist, und einem Befestigungsabschnitt, in den der Verstärkungsträger eingebettet ist, zusammen. Der Befestigungsabschnitt weist einen inneren Schenkel, einen äußeren Schenkel und einen den inneren Schenkel und den äußeren Schenkel miteinander verbindenden Basisabschnitt auf. Zwischen dem inneren Schenkel und dem äußeren Schenkel ist ein Aufnahmekanal angeordnet, der auf einen Flansch des Kraftfahrzeugs aufgesteckt werden kann. Der Verstärkungsträger umfasst einen ersten Flankenabschnitt, der sich in dem inneren Schenkel erstreckt, einen zweiten Flankenabschnitt, der sich in dem äußeren Schenkel erstreckt, und einen Mittelabschnitt, der den ersten Flankenabschnitt und den zweiten Flankenabschnitt miteinander verbindet und sich in dem Basisabschnitt erstreckt. Zumindest der erste Flankenabschnitt und/oder der zweite Flankenabschnitt sind mit einer Vielzahl an sich in einer zu der Längsrichtung orthogonalen Querrichtung erstreckenden Schlitzen versehen. Der erste Flankenabschnitt weist einen an dem Mittelabschnitt angrenzenden Schlitzbereich und einen dem Mittelabschnitt abgewandten Randbereich auf. Der Randbereich ist steifer ausgestaltet als der Schlitzbereich. Der innere Schenkel und der erste Flankenabschnitt sind im Bereich einer vorgesehenen Krümmung der Dichtung mit einer Aussparung versehen. Die Aussparung ist so dimensioniert, dass sie den Randbereich erfasst, das heißt, der Randbereich des ersten Flankenabschnitts und der diesen umgebende Teil des inneren Schenkels werden ausgespart. Die Größe der Aussparung in der Längsrichtung der Dichtung hängt vom jeweiligen Anwendungsfall ab und bemisst sich vor allem nach der Krümmung des Flansches.

Das erfindungsgemäße Verfahren zum Herstellen einer solchen Dichtung sieht vor, das Dichtungsprofil und den vorgefertigten Verstärkungsträger zu koextrudieren und nach der Extrusion den inneren Schenkel und den ersten Flankenabschnitt im Bereich einer vorgesehenen Krümmung der Dichtung mit wenigstens einer Aussparung zu versehen, die zumindest den Randbereich erfasst.

Die Erfindung beruht auf der Erkenntnis, die Anpassung der Dichtung an einen gekrümmten Verlauf des Flanschs nicht durch eine Biegebearbeitung der Dichtung, sondern durch das Vorsehen von wenigstens einer Aussparung zu ermöglichen. Die an den Stellen der Dichtung, an denen eine Biegung erforderlich ist, vorgesehene Aussparung gestattet, die Dichtung bei der Montage oder, falls zum Beispiel die Dichtung mit einer Zierleiste vormontiert wird, bei der Vormontage zu biegen, um eine Anpassung an den Verlauf des Flanschs zu erreichen. Die Erfindung macht sich ferner die Erkenntnis zu eigen, dass das Vorsehen der Aussparung ermöglicht, den in dem inneren Schenkel angeordneten Flankenabschnitt vergleichsweise steif auszugestalten, indem der Randbereich steifer als der Schlitzbereich ist. Der relativ steife Randbereich erleichtert zum einen die Extrusion der Dichtung und die anschließende mechanische Bearbeitung der Dichtung in der Konfektion und trägt zum anderen zu einem sicheren Sitz der Dichtung auf dem Flansch bei. Auf Grund der relativ steifen Ausgestaltung des erfindungsgemäßen Verstärkungsträgers gegenüber herkömmlichen, geschlitzten Verstärkungsträgern wird zudem das Auftreten von Welligkeiten in der Längsrichtung der Dichtung zumindest entlang dem inneren Schenkel verhindert.

In einer bevorzugten Ausgestaltung der erfindungsgemäßen Dichtung erfasst die Aussparung nicht nur den Randbereich, sondern auch einen Teil des Schlitzbereichs des ersten Flankenabschnitts. Eine solche Ausgestaltung bietet sich vor allem dann an, wenn die Dichtung in der Querrichtung zu biegen ist. Handelt es sich bei der Dichtung um eine Fensterschachtdichtung, dann verläuft die Querrichtung in der vertikalen Ebene. Bevorzugt umfasst der von der Aussparung entfernte Teil mehr als 25 Prozent, vorzugsweise mehr als 50 Prozent, des gesamten Schlitzbereichs, um eine ausreichende Verformungsfähigkeit in der Querrichtung sicherzustellen.

In einer weiteren bevorzugten Ausgestaltung der erfindungsgemäßen Dichtung ist das Dichtungsprofil im Bereich des äußeren Schenkels und/oder des Basisabschnitts mit einer Dekorschicht versehen, um eine in ästhetischer Hinsicht ansprechende Gestaltung zu erreichen. Zu diesem Zweck kann alternativ oder zusätzlich das Dichtungsprofil im Bereich des äußeren Schenkels und/oder des Basisabschnitts mit einer Zierleiste versehen sein. Das Vorsehen einer Zierleiste bietet sich vor allem dann an, wenn in dem äußeren Schenkel und/oder dem Basisabschnitt auf Grund der Schlitze des zweiten Flankenabschnitts der so genannte "Hungry Horse"-Effekt auftritt, um die mit diesem Effekt verbundene Welligkeit der Oberfläche der Dichtung zu kaschieren.

In einer bevorzugten Ausgestaltung der erfindungsgemäßen Dichtung hat der innere Schenkel eine sich in Querrichtung erstreckende Höhe, die wenigstens das Zweifache, vorzugsweise wenigstens das Dreifache, der Höhe des äußeren Schenkels beträgt. Vor allem bei einer solchen asymmetrischen Ausgestaltung des Befestigungsabschnitts kommt zum Tragen, dass sich der innere Schenkel trotz seiner vergleichsweise großen Höhe durch das Vorsehen der Aussparung einfach biegen lässt.

Bevorzugt ist der innere Schenkel so ausgestaltet, dass er an eine Befestigungsfläche des Flansches angelegt werden kann, um einen sicheren Sitz der Dichtung auf dem Flansch zu gewährleisten. In diesem Zusammenhang hat es sich ferner als vorteilhaft herausgestellt, wenn der innere Schenkel ein freies Ende aufweist, das als Rastabschnitt ausgestaltet ist. Der Rastabschnitt kann in eine Öffnung des Flanschs eingreifen, um durch den sich auf diese Weise ergebenden Formschluss eine zuverlässige Befestigung der Dichtung sicherzustellen.

Bevorzugt ist das Dichtungsprofil aus einem thermoplastischen Elastomer (TPE) oder Ethylen-Propylen-Dien-Kautschuk (EPDM) gefertigt, vorzugsweise extrudiert, um einer praxisgerechten Herstellung Rechnung zu tragen. Der Verstärkungsträger und/oder die Zierleiste sind zweckmäßigerweise aus Kunststoff oder Metall, vorzugsweise, Aluminium, gefertigt.

In einer bevorzugten Ausgestaltung des erfindungsgemäßen Verstärkungsträgers erstrecken sich die Schlitze des zweiten Flankenabschnitts bis zu dem freien Rand. Die demzufolge eine offene Kontur aufweisenden Schlitze verleihen dem zweiten Flankenabschnitt eine ausreichende Verformungsfähigkeit, um der Krümmung des Flansches zu folgen. Zumindest ein Großteil der Schlitze des ersten Flankenabschnitts hingegen endet an dem Randbereich, um den Randbereich steifer auszugestalten als den Schlitzbereich. In einer bevorzugten Ausgestaltung des erfindungsgemäßen Verstärkungsträgers ist der Randbereich frei von Schlitzen.

Bevorzugt sind die Schlitze des ersten Flankenabschnitts und/oder die Schlitze des zweiten Flankenabschnitts in der Längsrichtung äquidistant angeordnet. Die Schlitze des ersten Flankenabschnitts und die Schlitze des zweiten Flankenabschnitts sind vorteilhafterweise in der Querrichtung fluchtend angeordnet. Alternativ können die Schlitze des ersten Flankenabschnitts und die Schlitze des zweiten Flankenabschnitts in der Längsrichtung jedoch alternierend angeordnet sein, wobei sich wenigstens ein Schlitz des ersten Flankenabschnitts und ein Schlitz des zweiten Flankenabschnitts einander abwechseln.

Bevorzugt sind der erste Flankenabschnitt und/oder der zweite Flankenabschnitt um wenigstens eine sich in der Längsrichtung erstreckende Biegelinie gebogen. Der Verstärkungsträger kann demzufolge im Querschnitt annähernd U-förmig ausgestaltet sein. Darüber hinaus kann der Verstärkungsträger mit wenigstens einer Abwinkelung versehen sein, die zum Beispiel einen Rastabschnitt des Dichtungsprofils armiert.

In einer bevorzugten Ausgestaltung des erfindungsgemäßen Verstärkungsträgers hat der erste Flankenabschnitt in der Querrichtung y eine Höhe, die wenigstens das Zweifache, vorzugsweise wenigstens das Dreifache, der Höhe des zweiten Flankenabschnitts beträgt. Der Verstärkungsträger weist auf diese Weise einen asymmetrischen Querschnitt auf.

Zweckmäßigerweise ist der Verstärkungsträger aus Kunststoff oder Metall, vorzugsweise Aluminium, gefertigt, um eine praxisgerechte Handhabung sicherzustellen.

Einzelheiten und weitere Vorteile der Erfindung ergeben sich aus der nachfolgenden Beschreibung zweier bevorzugter Ausführungsbeispiele. In den die Ausführungsbeispiele lediglich schematisch darstellenden Zeichnungen veranschaulichen im Einzelnen:
- Fig. 1: eine Seitenansicht eines Kraftfahrzeugs;
- Fig. 2a: einen Schnitt entlang der Linie II-II in Fig. 1 bei einer ersten Ausführungsform der erfindungsgemäßen Dichtung,
- Fig. 2b: einen Schnitt gemäß Fig. 2a bei einer zweiten Ausführungsform der erfindungsgemäßen Dichtung;
- Fig. 3: einen Schnitt entlang der Linie III-III in Fig. 1;
- Fig. 4: eine perspektivische Ansicht, die eine teilweise frei geschnittene Dichtung zeigt, und
- Fig. 5, 6: Draufsichten auf den erfindungsgemäßen Verstärkungsträger im eingebauten Zustand.

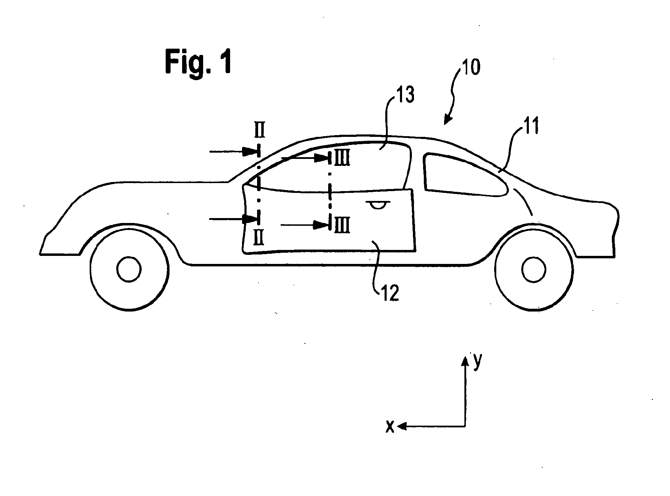

Das in Fig. 1 dargestellte Kraftfahrzeug 10 weist eine Karosserie 11 auf, an der eine Tür 12 angeordnet ist. In der Tür 12 ist eine Fensterscheibe 13 verfahrbar angeordnet. Die Tür 12 weist einen Fensterschacht auf, in den die Fensterscheibe 13 versenkt werden kann. Der obere Rand des Fensterschachts wird sowohl auf der Außenseite als auch auf der Innenseite der Fensterscheibe jeweils von einer Dichtung abgedichtet. Diese Fensterschachtdichtungen sind jeweils auf einen Flansch 14 aufgesteckt, der durch den oberen Rand des Fensterschachts gebildet wird.

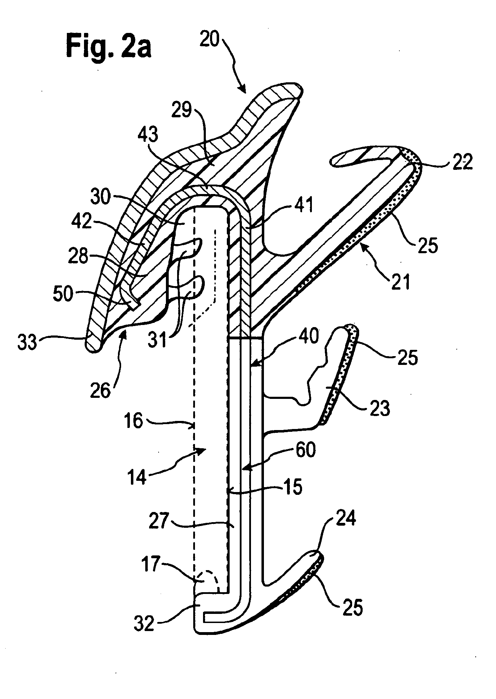

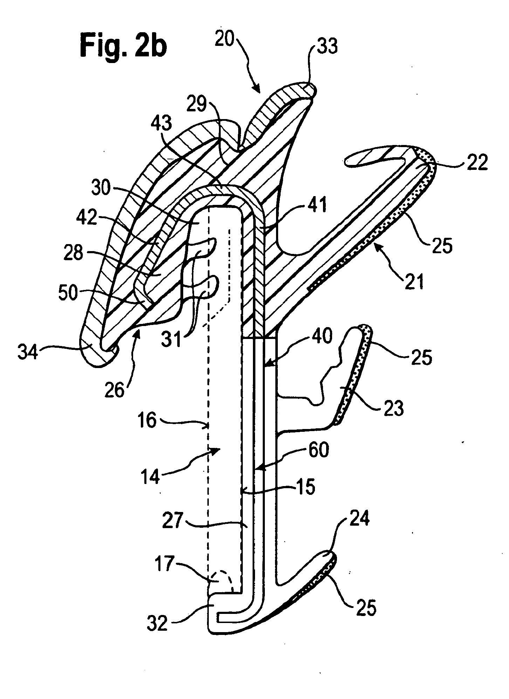

Die Fig. 2a bis 3 zeigen die äußere Fensterschachtdichtung, die ein aus einem elastomeren Werkstoff in einer Längsrichtung x extrudiertes Dichtungsprofil 20 und einen das Dichtungsprofil 20 armierenden und aus Metall gefertigten Verstärkungsträger 40 aufweist. Die Ausführungsform gemäß Fig. 2b unterscheidet sich von der Ausführungsform gemäß Fig. 2a darin, dass das Dichtungsprofil 20 mit einer Zierleiste 34 versehen ist, die ein in ästhetischer Hinsicht ansprechendes Äußeres erzeugt.

Das Dichtungsprofil 20 weist einen Dichtungsabschnitt 21 auf, der sich aus drei Dichtlippen 22, 23, 24 zusammensetzt. Die Dichtlippen 22, 23, 24 liegen dichtend an der Fensterscheibe 13 an und sind mit einer reibungsvermindernden Beschichtung oder Beflockung 25 versehen. Das Dichtungsprofil 20 weist ferner einen Befestigungsabschnitt 26 auf, der im Querschnitt im Wesentlichen U-förmig ausgestaltet ist und sich aus einem inneren Schenkel 27, einem äußeren Schenkel 28 und einem den inneren Schenkel 27 und den äußeren Schenkel 28 miteinander verbindenden Basisabschnitt 29 zusammensetzt. Die Höhe des inneren Schenkels 27 in einer zu der Längsrichtung x orthogonalen Querrichtung y beträgt mehr als das Dreifache der Höhe des äußeren Schenkels 28 und verleiht damit dem Befestigungsabschnitt 26 einen asymmetrischen Querschnitt. Zwischen dem inneren Schenkel 27 und dem äußeren Schenkel 28 ist ein Aufnahmekanal 30 angeordnet, der auf den Flansch 14 des oberen Rands des Fensterschachts aufgesteckt ist. Der Flansch 14 weist eine dem inneren Schenkel 27 zugewandte Befestigungsfläche 15 und eine dem äußeren Schenkel 28 zugewandte Befestigungsfläche 16 auf. Um einen sicheren Sitz des Dichtungsprofils 20 auf dem Flansch 14 sicherzustellen, ist der äußere Schenkel 28 mit Haltelippen 31 versehen, die an der Befestigungsfläche 16 anliegen, um einen hohen Kraftschluss zu bewirken. Der innere Schenkel 27 liegt an der Befestigungsfläche 15 an und weist ein freies Ende auf, das als Rastabschnitt 32 ausgestaltet ist. Der Rastabschnitt 32 greift in eine Öffnung 17 des Flansches 14 ein, um einen zusätzlichen Formschluss zwischen Dichtungsprofil 20 und Flansch 14 hervorzurufen.

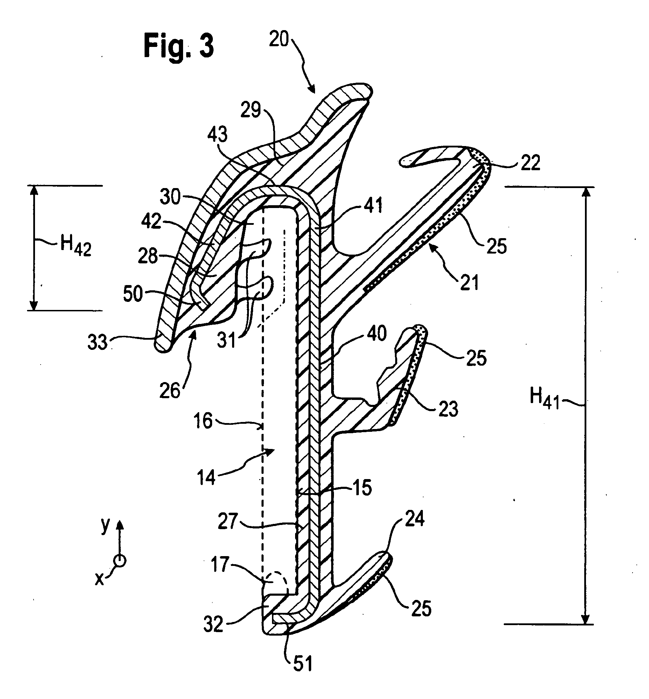

Die Fig. 2a und 3 geben ferner zu erkennen, dass das Dichtungsprofil 20 im Bereich des äußeren Schenkels 28 und des Basisabschnitts 29 mit einer Dekorschicht 33 versehen ist, die der Dichtung auf der Außenseite der Fensterscheibe 13 ein in ästhetischer Hinsicht ansprechende Gestaltung verleiht. Alternativ, wie in Fig. 2b dargestellt, oder zusätzlich zu der Dekorschicht 33 kann an dem äußeren Schenkel 28 und gegebenenfalls an dem Basisabschnitt 29 eine aus Kunststoff oder Metall bestehende Zierleiste 34 angeordnet sein.

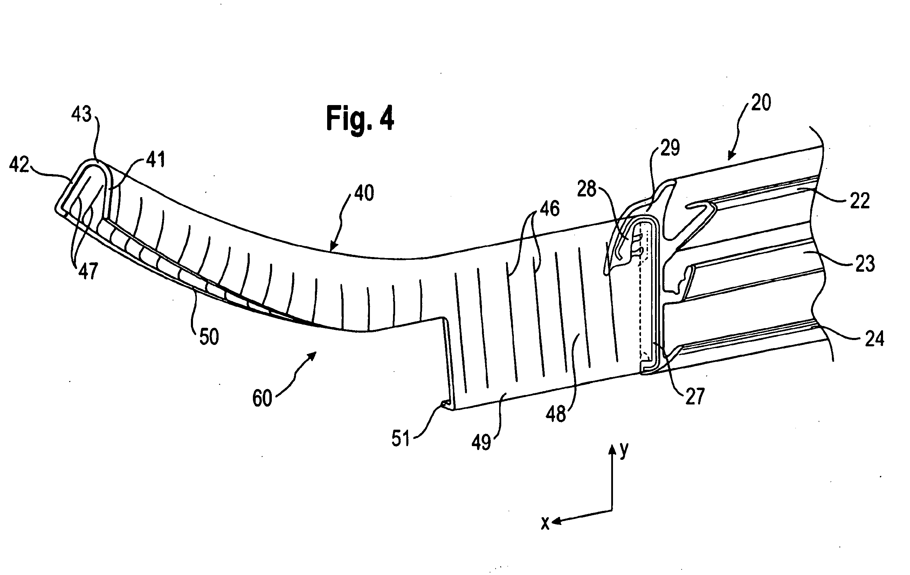

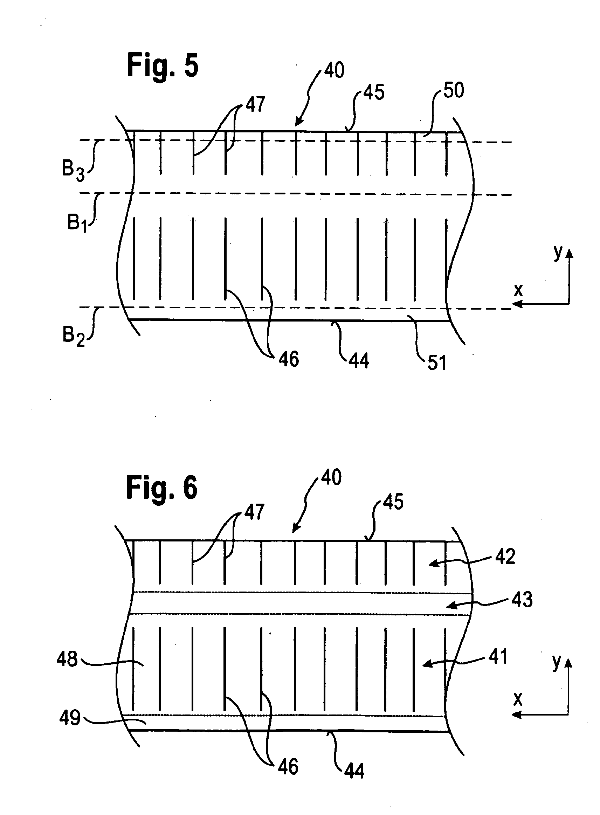

Wie die Fig. 4 bis 6 zu erkennen geben, weist der das Dichtungsprofil 20 armierende Verstärkungsträger 40 einen ersten Flankenabschnitt 41, einen zweiten Flankenabschnitt 42 und einen Mittelabschnitt 43 auf. Der Mittelabschnitt 43 verbindet die Flankenabschnitte 41, 42 miteinander. Der Flankenabschnitt 41 hat in der Querrichtung y eine Höhe H₄₁, die mehr als das Dreifache der Höhe H₄₂ des Flankenabschnitts 42 beträgt. Die Flankenabschnitte 41, 42 sind jeweils mit einer Vielzahl an sich in der Querrichtung y erstreckenden Schlitzen 46, 47 versehen. Die Schlitze 47 erstrecken sich bis zu dem freien Rand 45 des Flankenabschnitts 42. Der Flankenabschnitt 41 setzt sich aus einem Schlitzbereich 48 und einem Randbereich 49 zusammen, wobei die Schlitze 46 ausschließlich in dem Schlitzbereich 48 angeordnet sind und an dem Randbereich 49 enden. Der Randbereich 49, der sich in der Querrichtung y von dem freien Rand 44 bis zu dem Schlitzbereich 48 erstreckt, ist, wie insbesondere Fig. 6 zu erkennen gibt, demzufolge frei von Schlitzen und weist damit eine höhere Steifigkeit auf als der Schlitzbereich 48.

Die Fig. 5 und 6 geben ferner zu erkennen, dass die beispielsweise durch Einschneiden oder Stanzen gefertigten Schlitze 46, 47 in der Längsrichtung x äquidistant und in der Querrichtung y fluchtend angeordnet sind. Fig. 5 gibt außerdem drei Biegelinien B₁, B₂ und B₃ zu erkennen, um die der Verstärkungsträger 40 gebogen wird, um die in den Fig. 2a bis 3 dargestellte Querschnittsform zu erhalten. Durch das Biegen um die Biegelinien B₂ und B₃ entstehen Abwinklungen 50, 51, die zu einer festen Verbindung zwischen Dichtungsprofil 20 und Verstärkungsträger 40 beitragen. Die Abwicklung 51 dient zudem dazu, den Rastabschnitt 32 zu armieren.

Weiterhin gibt Fig. 1 zu erkennen, dass der obere Rand des Fensterschachts und damit der Flansch 14 in der Querrichtung y nach oben gekrümmt ist. Um dem Verlauf des Flansches 14 folgen zu können, ist die Dichtung im Bereich des inneren Schenkels 27 und des Flankenabschnitts 41 mit einer Aussparung 60 versehen. Wie insbesondere die Fig. 2 und 4 zu erkennen geben, erfasst die Aussparung 60 den Randbereich 49 und einen Teil des Schlitzbereichs 48, der mehr als 50 Prozent des gesamten Schlitzbereichs 48 beträgt. Durch das Aussparen des Randbereichs 49 erhalten die Schlitze 46 eine offene Kontur und der Flankenabschnitt 41 insgesamt eine hohe Verformungsfähigkeit, die sicherstellt, dass die Dichtung entsprechend der Kontur des Flanschs 14 gebogen werden kann. Die Größe der Aussparung 60 in der Querrichtung y und in der Längsrichtung x hängt von der Krümmung des Flanschs 14 und damit vom jeweiligen Anwendungsfall ab.

Die zuvor beschriebene Dichtung bedarf im Unterschied zum Stand der Technik keiner aufwendigen Biegebearbeitung. Das Vorsehen der Aussparung 60 im Bereich einer vorgesehenen Krümmung der Dichtung ermöglicht es, die Dichtung bei der Montage auf den Flansch 14 zu biegen. Auf Grund des steif ausgestalteten Randabschnitts 49 lässt sich die Dichtung einfach extrudieren und während der sich an der Extrusion anschließenden mechanischen Bearbeitung einfach konfektionieren. Nicht zuletzt verhindert der außerhalb der Aussparung 60 vorhandene Randabschnitt 49, dass das Auftreten von Welligkeiten in der Längsrichtung der Dichtung zumindest entlang dem inneren Schenkel 27 verhindert wird.

### Bezugszeichenliste

- 10: Kraftfahrzeug
- 11: Karosserie
- 12: Tür
- 13: Fensterscheibe
- 14: Flansch
- 15: Befestigungsfläche
- 16: Befestigungsfläche
- 17: Öffnung

- 20: Dichtungsprofil
- 21: Dichtungsabschnitt
- 22: Dichtlippe
- 23: Dichtlippe
- 24: Dichtlippe
- 25: Beflockung
- 26: Befestigungsabschnitt
- 27: innerer Schenkel
- 28: äußerer Schenkel
- 29: Basisabschnitt
- 30: Aufnahmekanal
- 31: Haltelippe
- 32: Rastabschnitt
- 33: Dekorschicht
- 34: Zierleiste

- 40: Verstärkungsträger
- 41: erster Flankenabschnitt
- 42: zweiter Flankenabschnitt
- 43: Mittelabschnitt
- 44: freier Rand
- 45: freier Rand
- 46: Schlitz
- 47: Schlitz
- 48: Schlitzbereich
- 49: Randbereich
- 50: Abwinkelung
- 51: Abwinkelung

- 60: Aussparung

- B₁: Biegelinie
- B₂: Biegelinie
- B₃: Biegelinie

- H₄₁: Höhe erster Flanschabschnitt
- H₄₂: Höhe zweiter Flanschabschnitt

- x: Längsrichtung
- y: Querrichtung

## Patentansprüche

1. Dichtung zum Abdichten der Fensterscheibe (13) eines Kraftfahrzeugs (10) mit
einem Dichtungsprofil (20), das aus einem elastisch verformbaren Werkstoff besteht und sich in einer Längsrichtung (x) erstreckt, und
einem Verstärkungsträger (40), der das Dichtungsprofil (20) armiert;
wobei das Dichtungsprofil (20) einen Dichtungsabschnitt (21), der mit wenigstens einer Dichtlippe (22, 23, 24) versehen ist, und einen Befestigungsabschnitt (26), in den der Verstärkungsträger (40) eingebettet ist, aufweist;
wobei der Befestigungsabschnitt (26) einen inneren Schenkel (27), einen äußeren Schenkel (28) und einen den inneren Schenkel (27) und den äußeren Schenkel (28) miteinander verbindenden Basisabschnitt (29) aufweist;
wobei zwischen dem inneren Schenkel (27) und dem äußeren Schenkel (28) ein Aufnahmekanal (30) angeordnet ist, der auf einen Flansch (14) des Kraftfahrzeugs (10) aufsteckbar ist;
wobei der Verstärkungsträger (40) einen ersten Flankenabschnitt (41), der sich in dem inneren Schenkel (27) erstreckt, einen zweiten Flankenabschnitt (42), der sich in dem äußeren Schenkel (28) erstreckt, und einen Mittelabschnitt (43), der den ersten Flankenabschnitt (41) und den zweiten Flankenabschnitt (42) miteinander verbindet und sich in dem Basisabschnitt (29) erstreckt, aufweist;
wobei zumindest der erste Flankenabschnitt (41) und der zweite Flankenabschnitt (42) mit einer Vielzahl an sich in einer zu der Längsrichtung (x) orthogonalen Querrichtung (y) erstreckenden Schlitzen (46, 47) versehen sind;
wobei der erste Flankenabschnitt (41) einen an den Mittelabschnitt (43) angrenzenden Schlitzbereich (48) und einen dem Mittelabschnitt (43) abgewandten Randbereich (49), der steifer als der Schlitzbereich (48) ist, umfasst und **dadurch gekennzeichnet, dass**
der innere Schenkel (27) und der erste Flankenabschnitt (41) im Bereich einer vorgesehenen Krümmung der Dichtung mit einer Aussparung (60) versehen sind, die zumindest den Randbereich (49) erfasst.

2. Dichtung nach Anspruch 1, **dadurch gekennzeichnet, dass** die Aussparung (60) den Randbereich (49) und einen Teil des Schlitzbereiches (48) erfasst.

3. Dichtung nach Anspruch 2, **dadurch gekennzeichnet, dass** der von der Aussparung (60) entfernte Teil mehr als 25 % des gesamten Schlitzbereiches (48) umfasst, wobei vorzugsweise der von der Aussparung (60) entfernte Teil mehr als 50 % des gesamten Schlitzbereiches (48) umfasst.

4. Dichtung nach einem der Ansprüche 1 bis 3, **dadurch gekennzeichnet, dass** das Dichtungsprofil (20) im Bereich des äußeren Schenkels (28) und/oder des Basisabschnitts (29) mit einer Dekorschicht (33) versehen ist.

5. Dichtung nach einem der Ansprüche 1 bis 4, **dadurch gekennzeichnet, dass** das Dichtungsprofil (20) im Bereich des äußeren Schenkels (28) und/oder des Basisabschnitts (29) mit einer Zierleiste (34) versehen ist.

6. Dichtung nach einem der Ansprüche 1 bis 5, **dadurch gekennzeichnet, dass** der innere Schenkel (27) eine sich in der Querrichtung (y) erstreckende Höhe hat, die wenigstens das Zweifache der Höhe des äußeren Schenkels (28) beträgt, wobei vorzugsweise der innere Schenkel (27) eine sich in der Querrichtung (y) erstreckende Höhe hat, die wenigstens das Dreifache der Höhe des äußeren Schenkels (28) beträgt.

7. Dichtung nach einem der Ansprüche 1 bis 6, **dadurch gekennzeichnet, dass** der innere Schenkel (27) an eine Befestigungsfläche (15) des Flanschs (14) anlegbar ist.

8. Dichtung nach einem der Ansprüche 1 bis 7, **dadurch gekennzeichnet, dass** der innere Schenkel (27) ein freies Ende aufweist, das als Rastabschnitt (32) ausgestaltet ist.

9. Dichtung nach einem der Ansprüche 1 bis 8, **dadurch gekennzeichnet, dass** das Dichtungsprofil (20) aus einem thermoplastischen Elastomer oder Ethylen-Propylen-Dien-Kautschuk gefertigt ist, wobei vorzugsweise der Verstärkungsträger (40) und/oder die Zierleiste (34) aus Kunststoff oder Metall gefertigt sind.

10. Verstärkungsträger, insbesondere zum Armieren einer aus einem elastischen Werkstoff gefertigten Dichtung, mit
einem ersten Flankenabschnitt (41), der einen freien Rand (44) aufweist, einem zweiten Flankenabschnitt (42), der einen freien Rand (45) aufweist, und einem Mittelabschnitt (43), der den ersten Flankenabschnitt (41) und den zweiten Flankenabschnitt (42) miteinander verbindet;
wobei der erste Flankenabschnitt (41), der zweite Flankenabschnitt (42) und der Mittelabschnitt (43) in einer Längsrichtung (x) verlaufen und zumindest der erste Flankenabschnitt (41) und der zweite Flankenabschnitt (42) mit einer Vielzahl an sich in einer zu der Längsrichtung (x) orthogonalen Querrichtung (y) erstreckenden Schlitzen (46, 47) versehen sind;
wobei der erste Flankenabschnitt (41) einen an den Mittelabschnitt (45) angrenzenden Schlitzbereich (48) und einen an den freien Rand (45) angrenzenden Randbereich (49), der steifer als der Schlitzbereich (48) ist, umfasst, **dadurch gekennzeichnet, dass**
der erste Flankenabschnitt (41) im Bereich einer vorgesehenen Krümmung des Verstärkungsträgers (40) mit einer Aussparung (60) versehen ist, die zumindest den Randbereich (49) erfasst.

11. Verstärkungsträger nach Anspruch 10, **dadurch gekennzeichnet, dass** die Aussparung (60) den Randbereich (49) und einen Teil des Schlitzbereiches (48) erfasst.

12. Verstärkungsträger nach Anspruch 11, **dadurch gekennzeichnet, dass** der von der Aussparung (60) entfernte Teil mehr als 25 % des gesamten Schlitzbereiches (48) umfasst, wobei vorzugsweise der von der Aussparung (60) entfernte Teil mehr 50 % des gesamten Schlitzbereiches (48) umfasst.

13. Verstärkungsträger nach einem der Ansprüche 10 bis 12, **dadurch gekennzeichnet, dass** sich die Schlitze (47) des zweiten Flankenabschnitts (42) bis zu dem freien Rand (45) erstrecken.

14. Verstärkungsträger nach einem der Ansprüche 10 bis 13, **dadurch gekennzeichnet, dass** die Schlitze (46) des ersten Flankenabschnitts (41) an dem Randbereich (49) enden.

15. Verstärkungsträger nach einem der Ansprüche 10 bis 14, **dadurch gekennzeichnet, dass** die Schlitze (46) des ersten Flankenabschnitts (41) und/oder die Schlitze (47) des zweiten Flankenabschnitts (42) in der Längsrichtung (x) äquidistant angeordnet sind.

16. Verstärkungsträger nach einem der Ansprüche 10 bis 15, **dadurch gekennzeichnet, dass** die Schlitze (46) des ersten Flankenabschnitts (41) und die Schlitze (47) des zweiten Flankenabschnitts (42) in der Querrichtung (y) fluchtend angeordnet sind.

17. Verstärkungsträger nach einem der Ansprüche 10 bis 16, **dadurch gekennzeichnet, dass** die Schlitze (46) des ersten Flankenabschnitts (41) und die Schlitze (47) des zweiten Flankenabschnitts (42) in der Längsrichtung (x) alternierend angeordnet sind, wobei sich wenigstens ein Schlitz (46) des ersten Flankenabschnitts (41) und ein Schlitz (47) des zweiten Flankenabschnitts (42) einander abwechseln.

18. Verstärkungsträger nach einem der Ansprüche 10 bis 17, **dadurch gekennzeichnet, dass** der erste Flankenabschnitt (41) und/oder der zweite Flankenabschnitt (42) um wenigstens eine in der Längsrichtung (x) erstreckende Biegelinie (B₂, B₃) gebogen sind.

19. Verstärkungsträger nach einem der Ansprüche 10 bis 18, **dadurch gekennzeichnet, dass** der erste Flankenabschnitt (41) in der Querrichtung (y) eine Höhe (H₄₁) hat, die wenigstens das Zweifache der Höhe (H₄₂) des zweiten Flankenabschnitts (42) beträgt, wobei vorzugsweise der erste Flankenabschnitt (41) in der Querrichtung (y) eine Höhe (H₄₁) hat, die wenigstens das Dreifache der Höhe (H₄₂) des zweiten Flankenabschnitts (42) beträgt.

20. Verfahren zum Herstellen einer Dichtung, die zum Abdichten der Fensterscheibe (13) eines Kraftfahrzeugs (10) dient, mit folgenden Verfahrensschritten:
ein Dichtungsprofil (20), das aus einem elastisch verformbaren Werkstoff besteht und zumindest einen Befestigungsabschnitt (26) umfasst, der einen inneren Schenkel (27), einen äußeren Schenkel (28) und einen den inneren Schenkel (27) und den äußeren Schenkel (28) miteinander verbindenden Basisabschnitt (29) aufweist, und ein Verstärkungsträger (40) nach einem der Ansprüche 10 bis 19, der das Dichtungsprofil (20) armiert, werden so koextrudiert, dass der Verstärkungsträger (40) in den Befestigungsabschnitt (26) eingebettet wird;
nach der Extrusion werden der innere Schenkel (27) und der erste Flankenabschnitt (41) im Bereich einer vorgesehenen Krümmung der Dichtung mit wenigstens einer Aussparung (60) versehen, die zumindest den Randbereich (49) erfasst, und
der Verstärkungsträger (40) wird um wenigstens eine sich in der Längsrichtung (x) erstreckende Biegelinie (B₁, B₂, B₃) gebogen.

## Claims

1. A seal which seals the window (13) of a motor vehicle (10) having
a sealing profile (20) made of an elastic, deformable material extending in a longitudinal direction (x) and
a reinforcing support (40) which reinforces the sealing profile (20);
wherein the sealing profile (20) comprises a sealing section (21) with at least one sealing lip (22, 23, 24) and a fastening section (26) in which the reinforcing support (40) is embedded;
wherein the fastening section (26) has an inner limb (27), an outer limb (28) and a base section (29) which connects the inner limb (27) and the outer limb (28);
wherein a receiving channel (30) which can be attached to a flange (14) of the motor vehicle (10) is provided between the inner limb (27) and the outer limb (28);
wherein the reinforcing support (40) comprises a first flank section (41) extending into the inner limb (27), a second flank section (42) extending into the outer limb (28) and a central section (43) which connects the first flank section (41) to the second flank section (42) and which extends into the base section (29);
wherein at least the first flank section (41) and the second flank section (42) are provided with a multiplicity of slits (46, 47) extending in a transverse direction (y) perpendicular to the longitudinal direction (x);
wherein the first flank section (41) is composed of a slit region (48) bordering on the central section (43) and an edge region (49) at a distance from the central section (43) which is stiffer than the slit region (48) and **characterised in that**
the inner limb (27) and the first flank section (41) are provided in the region of a designated curvature of the seal with a cut-out section (60) which covers at least the edge region (49).

2. Seal according to Claim 1 **characterised in that** the cut-out section (60) includes the edge region (49) and a part of the slit region (48).

3. Seal according to Claim 2 **characterised in that** the section distant from the cut-out section (60) constitutes more than 25% of the total slit region, and the section distant from the cut-out section (60) preferably constitutes more than 50% of the total slit region (48).

4. Seal according to one of the claims 1 to 3 **characterised in that** the sealing profile (20) is provided with a decorative layer (33) in the area of the outer limb (28) and/or the base section (29).

5. Seal according to one of the claims 1 to 4 **characterised in that** the sealing profile (20) is provided with a trim strip (34) in the area of the outer limb (28) and/or the base section (29).

6. Seal according to one of the claims 1 to 5 **characterised in that** the inner limb (27) has a height extending in the transverse direction (y) which is at least twice the height of the outer limb (28), and the inner limb (27) preferably has a height extending in the transverse direction (y) which is at least three times the height of the outer limb (28).

7. Seal according to one of the claims 1 to 6 **characterised in that** the inner limb (27) can be abutted against a fastening surface (15) of the flange (14).

8. Seal according to one of the claims 1 to 7 **characterised in that** the inner limb (27) has a free end which is configured as a locking section (32).

9. Seal according to one of the claims 1 to 8 **characterised in that** the sealing profile (20) is manufactured of a thermo-plastic elastomer or ethylene-propylene-diene rubber and the reinforcing support (40) and/or the trim (34) are preferably made of plastic or metal.

10. Reinforcing support, in particular for reinforcing a seal made of an elastic material with
a first flank section (41) having a free end (44), a second flank section (42) having a free end (45), and a central section (43) which connects the first flank section (41) and the second flank section (42);
wherein the first flank section (41), the second flank section (42) and the central section (43) extend in a longitudinal direction (x) and at least the first flank section (41) and second flank section (42) are provided with a plurality of slits (46, 47) which run in a transverse direction (x) perpendicular to the longitudinal direction (y);
wherein the first flank section (41) comprises a slit region (48) bordering on the central section (43) and an edge region (49) adjacent to the free end (45) which is stronger than the slit region (48), **characterised in that**
the first flank section (41) is provided with a cut-out section (60) in the area of a designated curvature of the reinforcing support (40) which includes at least the edge region (49).

11. Reinforcing support according to Claim 10 **characterised in that** the cut-out section (60) includes the edge region (49) and a part of the slit region (48).

12. Reinforcing support according to Claim 11 **characterised in that** the part distant from the cut-out section (60) consists of more than 25% of the total slit region (48) and preferably the part distant from the cut-out section (60) consists of more than 50% of the total slit region (48).

13. Reinforcing support according to one of the claims 10 to 12 **characterised in that** the slits (47) of the second flank section (42) extend to the free end (45).

14. Reinforcing support according to one of the claims 10 to 13 **characterised in that** the slits (46) of the first flank section (41) end at the edge region (49).

15. Reinforcing support according to one of the claims 10 to 14 **characterised in that** the slits (46) of the first flank section (41) and/or the slits (47) of the second flank section (42) are arranged equidistant from one another in the longitudinal direction (x).

16. Reinforcing support according to one of the claims 10 to 15 **characterised in that** the slits (46) of the first flank section (41) and the slits (47) of the second flank section (42) are arranged in alignment in the transverse direction (y).

17. Reinforcing support according to one of the claims 10 to 16 **characterised in that** the slits (46) of the first flank section (41) and the slits (47) of the second flank section (42) are arranged in alternating manner in the longitudinal direction (x) and at least one slit (46) of the first flank section (41) and one slit (47) of the second flank section (42) alternate with each other.

18. Reinforcing support according to one of the claims 10 to 17 **characterised in that** the first flank section (41) and/or the second flank section (42) are curved along at least one of the bend lines (B₂, B₃) extending in the longitudinal direction (x).

19. Reinforcing support according to one of the claims 10 to 18 **characterised in that** the first flank section (41) has a height (H₄₁) in the transverse direction (y) which is at least twice the height (H₄₂) of the second flank section (42), and preferably the first flank section (41) has a height (H₄₁) in the transverse direction (y) which is at least three times the height (H₄₂) of the second flank section (42).

20. Method for producing a seal for sealing the window pane (13) of a motor vehicle (10) having the following steps:
a sealing profile (20), made of an elastic, deformable material and comprising at least one fastening section (26) having an inner limb (27), an outer limb (28) and a base section (29) which connects the inner limb (27) and the outer limb (28), and a reinforcing support (40) according to one of the claims 10 to 19 which reinforces the sealing profile (20), are co-extruded so that the reinforcing support (40) is embedded in the fastening section (26);
after extrusion the inner limb (27) and the first flank section (41) in the area of a designated curvature of the seal are provided with at least one cut-out section (60) which includes at least the edge region (49), and
the reinforcing support (40) is curved along at least one of the bend lines (B₁, B₂, B₃) extending in a longitudinal direction (x).

## Revendications

1. Garniture d'étanchéité pour étancher la vitre (13) d'une fenêtre d'un véhicule automobile (10), comprenant
un profilé d'étanchéité (20), constitué en un matériau élastiquement déformable et s'étendant dans une direction longitudinale (x), et
un porteur de renforcement (40) qui forme une armure du profilé d'étanchéité (20);
dans laquelle le profilé d'étanchéité (20) comprend un tronçon d'étanchéité (21), qui est pourvu d'au moins une lèvre d'étanchéité (22, 23, 24), et un tronçon de fixation (26), dans lequel est noyé le porteur de renforcement (40);
dans laquelle le tronçon de fixation (26) comprend une branche intérieure (27), une branche extérieure (28), et un tronçon de base (29) qui relie l'une à l'autre la branche intérieure (27) et la branche extérieure (28);
dans laquelle un canal de réception (30), susceptible d'être enfiché sur une bride (14) du véhicule automobile (10), est agencé entre la branche intérieure (27) et la branche extérieure (28);
dans laquelle le porteur de renforcement (40) comprend un tronçon de flanc (41), qui s'étend dans la branche intérieure (27), un second tronçon de flanc (42), qui s'étend dans la branche extérieure (28), et un tronçon médian (43), qui relie le premier tronçon de flanc (41) et le second tronçon de flanc (42) l'un avec l'autre et qui s'étend dans le tronçon de base (29) ;
dans laquelle au moins le premier tronçon de flanc (41) et le second tronçon de flanc (42) sont pourvus d'une pluralité de fentes (46, 47) qui s'étendent par elles-mêmes dans une direction transversale (y) perpendiculaire à la direction longitudinale (x) ;
dans laquelle le premier tronçon de flanc (41) comprend une zone à fentes (48) adjacente au tronçon médian (43), et une zone de bordure (49), détournée du tronçon médian (43), qui est plus rigide que la zone à fentes (48), et
**caractérisée en ce que**
la branche intérieure (27) et le premier tronçon de flanc (41) sont pourvus, dans la région d'une courbure prévue dans la garniture d'étanchéité, d'un évidement (60) qui coiffe au moins la zone de bordure (49).

2. Garniture d'étanchéité selon la revendication 1, **caractérisée en ce que** l'évidement (60) coiffe la zone de bordure (49) et une partie de la zone à fentes (48).

3. Garniture d'étanchéité selon la revendication 2, **caractérisée en ce que** la partie éloignée de l'évidement (60) comprend plus de 25 % de la totalité de la zone à fentes (48), et **en ce que** la partie éloignée de l'évidement (60) comprend de préférence plus de 50 % de la totalité de la zone à fentes (48).

4. Garniture d'étanchéité selon l'une des revendications 1 à 3, **caractérisée en ce que** le profilé d'étanchéité (20) est pourvu d'une couche de décoration (33) dans la région de la branche extérieure (28) et/ou du tronçon de base (29).

5. Garniture d'étanchéité selon l'une des revendications 1 à 4, **caractérisée en ce que** le profilé d'étanchéité (20) est pourvu d'un enjoliveur (34) dans la région de la branche extérieure (28) et/ou du tronçon de base (29).

6. Garniture d'étanchéité selon l'une des revendications 1 à 5, **caractérisée en ce que** la branche intérieure (27) possède une hauteur, s'étendant en direction transversale (y), qui s'élève au moins au double de la hauteur de la branche extérieure (28), dans laquelle la branche intérieure (27) possède de préférence une hauteur, s'étendant dans la direction transversale (y), qui s'élève au moins au triple de la hauteur de la branche extérieure (28).

7. Garniture d'étanchéité selon l'une des revendications 1 à 6, **caractérisée en ce que** la branche intérieure (27) peut être appliquée contre une surface de fixation (15) de la bride (14).

8. Garniture d'étanchéité selon l'une des revendications 1 à 7, **caractérisée en ce que** la branche intérieure (27) comprend une extrémité libre qui est conçue à la manière d'un tronçon d'enclenchement (32).

9. Garniture d'étanchéité selon l'une des revendications 1 à 8, **caractérisé en ce que** le profilé d'étanchéité (20) est fabriqué à partir d'un élastomère thermoplastique ou d'un caoutchouc éthylène-propylène-diène, dans laquelle de préférence le porteur de renforcement (40) et/ou l'enjoliveur (34) sont fabriqués en matière plastique ou en métal.

10. Porteur de renforcement, en particulier pour armer une garniture d'étanchéité fabriquée à partir d'un matériau élastique, comprenant
un premier tronçon de flanc (41) qui comporte une bordure libre (44), un second tronçon de flanc (42) qui comporte une bordure libre (45), et un tronçon médian (43) qui relie le premier tronçon de flanc (41) et le second tronçon de flanc (42) l'un à l'autre;
dans lequel le premier tronçon de flanc (41), le second tronçon de flanc (42) et le tronçon médian (43) s'étendent dans une direction longitudinale (x), et au moins le premier tronçon de flanc (41) et le second tronçon de flanc (42) sont pourvus d'une pluralité de fentes (46, 47) qui s'étendent dans une direction transversale (y) perpendiculaire à la direction longitudinale (x);
dans lequel le premier tronçon de flanc (41) comprend un tronçon à fentes (48) adjacent au tronçon médian (45) et une zone de bordure (49), adjacente à la bordure libre (45), qui est plus rigide que la zone à fentes (48),
**caractérisé en ce que** le premier tronçon de flanc (41) est pourvu, dans la région d'une courbure prévue dans le porteur de renforcement (40), d'un évidement (60) qui coiffe au moins la zone de bordure (49).

11. Porteur de renforcement selon la revendication 10, **caractérisé en ce que** l'évidement (60) coiffe la zone de bordure (49) et une partie de la zone à fentes (48).

12. Porteur de renforcement selon la revendication 11, **caractérisé en ce que** la partie éloignée de l'évidement (60) inclut plus de 25 % de la totalité de la zone à fentes (48), et dans lequel la partie éloignée de l'évidement (60) inclut de préférence plus de 50 % de la totalité de la zone à fentes (48).

13. Porteur de renforcement selon l'une des revendications 10 à 12, **caractérisé en ce que** les fentes (47) du second tronçon de flanc (42) s'étendent jusqu'à la bordure libre (45).

14. Porteur de renforcement selon l'une des revendications 10 à 13, **caractérisé en ce que** les fentes (46) du premier tronçon de flanc (41) se terminent au niveau de la zone de bordure (49).

15. Porteur de renforcement selon l'une des revendications 10 à 14, **caractérisé en ce que** les fentes (46) du premier tronçon de flanc (41) et/ou les fentes (47) du second tronçon de flanc (42) sont agencées de manière équidistante dans la direction longitudinale (x).

16. Porteur de renforcement selon l'une des revendications 10 à 15, **caractérisé en ce que** les fentes (46) du premier tronçon de flanc (41) et les fentes (47) du second tronçon de flanc (42) sont agencées en alignement dans la direction transversale (y).

17. Porteur de renforcement selon l'une des revendications 10 à 16, **caractérisé en ce que** les fentes (46) du premier tronçon de flanc (41) et les fentes (47) du second tronçon de flanc (42) sont agencées en alternance dans la direction longitudinale (x), et au moins une fente (46) du premier tronçon de flanc (41) et une fente (47) du second tronçon de flanc (42) sont mutuellement en alternance.

18. Porteur de renforcement selon l'une des revendications 10 à 17, **caractérisé en ce que** le premier tronçon de flanc (41) et/ou le second tronçon de flanc (42) sont cintrés autour d'au moins une ligne de cintrage (B₂, B₃) qui s'étend en direction longitudinale (x).

19. Porteur de renforcement selon l'une des revendications 10 à 18, **caractérisé en ce que** le premier tronçon de flanc (41) possède en direction transversale (y) une hauteur (H₄₁) qui s'élève au moins au double de la hauteur (H₄₂) du second tronçon de flanc (42), et dans lequel le premier tronçon de flanc (41) présente en direction transversale (y) de préférence une hauteur (H₄₁) qui s'élève au moins au triple de la hauteur (H₄₂) du second tronçon de flanc (42).

20. Procédé pour fabriquer une garniture d'étanchéité, qui sert à étancher la vitre (13) de la fenêtre d'un véhicule automobile (10), présentant les étapes de procédé suivantes :
un profilé d'étanchéité (20), constitué d'un matériau élastiquement déformable et comprenant au moins un tronçon de fixation (26), qui comprend une branche intérieure (27), une branche extérieure (28) et un tronçon de base (29) qui relie la branche intérieure (27) et la branche extérieure (28) l'une à l'autre, et un porteur de renforcement (40) selon l'une des revendications 10 à 19, qui forme une armature pour le profilé d'étanchéité (20), sont coextrudés de telle façon que le porteur de renforcement (40) est noyé dans le tronçon de fixation (26) ;
après l'extrusion, la branche intérieure (27) et le premier tronçon de flanc (41) sont pourvus d'au moins un évidement (60), dans la région d'une courbure prévue dans la garniture d'étanchéité, cet évidement incluant au moins la zone de bordure (49), et
le porteur de renforcement (40) est cintré au moins autour d'une ligne de cintrage (B₁, B₂, B₃) qui s'étend en direction longitudinale (x).
